# EUROPÄISCHE PATENTSCHRIFT

(11) **EP 0 854 952 B1**
(45) Veröffentlichungstag und Bekanntmachung des Hinweises auf die Patenterteilung: **29.08.2001**
(21) Anmeldenummer: 96934335.9
(22) Anmeldetag: 05.08.1996
(51) Int. Cl.: D06P 1/00

(54) **VERFAHREN ZUM FÄRBEN EINES TEXTILEN SUBSTRATES**
PROCESS FOR DYEING A TEXTILE SUBSTRATE
PROCEDE DE TEINTURE D'UN SUBSTRAT TEXTILE

(30) Priorität: 06.10.1995 DE 19537317
(43) Veröffentlichungstag der Anmeldung: 29.07.1998
(73) Patentinhaber: Amann & Söhne GmbH & Co., 74355 Bönnigheim (DE)
(72) Erfinder: EGGERS, Rudolf, D-21614 Buxtehude (DE); VON SCHNITZLER, Joachim, D-22307 Hamburg (DE); WÖRNER, Gottlob, D-74357 Bönnigheim (DE)
(74) Vertreter: Lau-Loskill, Philipp, Dipl.-Phys.
(86) Internationale Anmeldenummer: DE9601458
(87) Internationale Veröffentlichungsnummer: WO9713915

(56) Entgegenhaltungen:
- EP-A- 0 514 337
- WO-A-93/14259
- WO-A-94/18264
- DE-A- 3 906 724
- DE-A- 4 237 823
- DE-A- 4 238 621
- DE-A- 4 238 622
- INDUSTRIE TEXTILE, Bd. 1, Nr. 1233, 1.Juni 1992, Seite 58 XP000288840 "TEINTURE DU POLYESTER"
- JOURNAL OF THE TEXTILE INSTITUTE, Bd. 84, Nr. 4, 1.Januar 1993, Seiten 534-552, XP000441291 KNITTEL D ET AL: "APPLICATION OF SUPERCRITICAL CARBON DIOXIDE IN FINISHING PROCESSES"

## Beschreibung

Die vorliegende Erfindung betrifft ein Verfahren zum Färben eines textilen Substrates, insbesondere zum Färben von Garnen aus Polyester, mit den Merkmalen des Oberbegriffs des Patentanspruchs 1.

Üblicherweise werden in der Textilveredelung textile Substrate in wäßrigen Systemen gefärbt, wobei beispielsweise zum Färben von Flächengebilden, Garnen, Filamenten oder Fasern aus Polyester in der Regel Dispersionsfarbstoffe eingesetzt werden, die jedoch im wäßriges System nicht löslich sind. Dies hat zur Folge, daß aus dem im Prinzip wasserunlöslichen Dispersionsfarbstoff zu Beginn der Färbung eine monomolekulare Dispersion des Farbstoffes im wäßrigen System unter Zuhilfenahme von entsprechenden Dispergiermitteln erstellt werden muß. Das bekannte Färben im wäßrigen System erfordert somit nicht nur einen Zusatz von entsprechenden Dispergiermitteln sondern verursacht auch gleichzeitig eine hohe Umweltbelastung, die darauf zurückzuführen ist, daß einerseits eine relativ hohe Wassermenge notwendig ist und somit auch eine entsprechend hohe Abwassermenge anfällt, und andererseits zur Erzielung von vertretbaren Echtheiten insbesondere bei mittleren und dunklen Farbtönen eine reduktive Nachreinigung durchgeführt werden muß, wodurch die Abwassermenge noch weiter vergrößert wird.

Um diese zuvor beschriebenen und nur beispielhaft genannten Nachteile zu umgehen, wird zunehmend vorgeschlagen, das beim konventionellen Färben für den Transport des Farbstoffes erforderliche Wasser durch ein überkritisches Fluid zu ersetzen.

Ein Verfahren mit den Merkmalen des Oberbegriffs des Patentanspruchs 1 ist aus der DE-A-39 06 724 bekannt. Hierbei wird bei dem bekannten Verfahren das jeweils zu färbende textile Substrat in einem Autoklaven angeordnet und mit einem, mindestens einen Farbstoff aufweisenden überkritischen Fluid an- bzw. durchströmt, wobei das überkritische Fluid über ein dem Autoklaven zugeordnetes Zirkulationssystem ständig in den Autoklaven eingespeist und auch aus diesem wieder abgezogen wird, um so die erwünschte An- bzw. Durchströmung des zu färbenden textilen Substrates herbeizuführen. Innerhalb dieses Zirkulationssystems können dann neben der erforderlichen Pumpe und den hierzu gehörenden Rohrleitungen zusätzlich noch beispielsweise Wärmetauscher und/oder Farbstoffansatzgefäße vorhanden sein.

Nachdem bei dem bekannten Verfahren das mit mindestens einem Farbstoff beladene überkritische Fluid das textile Substrat für eine vorgegebene Zeit angeströmt bzw. durchströmt hat, erfolgt zur Beendigung der Färbung eine Druckabsenkung, Temperaturabsenkung und/oder Volumenveränderung, um so das überkritische Fluid in das entsprechende Gas umzuwandeln.

Ausdrücklich stellt die DE 39 06 724 A als einen wesentlichen Vorteil des dort beschriebenen Verfahrens heraus, daß bei Färbungen mit Dispersionsfarbstoffen selbst bei mittleren und dunklen Farbtönen auf eine reduktive Reinigung verzichtet werden kann, ohne daß hierdurch die erzielten Farbechtheiten verschlechtert werden. Diese Aussage mag für die in der DE 39 06 724 A beschriebenen Laborfärbungen zutreffen, hat sich jedoch bei der großtechnischen Realisierung des Färbens von textilen Substraten, insbesondere solchen Substraten, die aus Polyester bestehen oder Polyester enthalten, nicht bestätigt. Hier konnte nämlich festgestellt werden, daß die zuvor genannten und mit mindestens einem Dispersionsfarbstoff gefärbten Substrate nach der Färbung in überkritischem Fluid schlechte Farbechtheiten aufwiesen, so daß ein derartig gefärbtes textiles Substrat, insbesondere in einem mittleren oder dunklen Farbton, ohne zusätzliche Nachbehandlung nicht vermarktbar war.

Ergänzend zu dem zuvor abgehandelten Stand der Technik wird noch auf eine Veröffentlichung in "Industrie Textile, Vol. 1, No. 1233, Seite 58", verwiesen, wo explizit herausgestellt ist, daß der dort beschriebene bekannte Färbevorgang, der in überkritischem Kohlendioxid durchgeführt wird, dadurch nach einer Färbezeit von etwa zehn Minuten beendet wird, daß das Färbebad abgekühlt wird. Um hierbei das für die Färbung verwendete Kohlendioxid wieder zu reinigen, d.h. dieses Fluid von dem nicht auf das Textilgut aufgezogenen Farbstoffe zu befreien, schlägt das bekannte Verfahren vor, nach Beendigung der Färbung das verbleibende Kohlendioxid zu zentrifugieren oder zu filtrieren.

Der vorliegenden Erfindung liegt die Aufgabe zugrunde, ein Verfahren der angegebenen Art zur Verfügung zu stellen, mit dem textile Substrate in einem überkritischen Fluid mit einem hohen Farbechtheitsniveau färbbar sind.

Diese Aufgabe wird erfindungsgemäß durch ein Verfahren mit den kennzeichnenden Merkmalen des Patentanspruchs 1 gelöst.

Das erfindungsgemäße Verfahren zum Färben eines textilen Substrates, insbesondere zum Färben von Garnen aus Polyester mit Dispersionsfarbstoffen, sieht vor, daß das jeweils zu färbende Substrat in einem Autoklaven angeordnet und dort mit einem, mindestens einen Farbstoff aufweisenden überkritischen Fluid an- bzw. durchströmt wird. Hierbei wird das überkritische Fluid über ein dem Autoklaven zugeordnetes Zirkulationssystem ständig gefördert, derart, daß das mit dem mindestens einen Farbstoff beladene überkritische Fluid aus dem Autoklaven, vorzugsweise im Deckelbereich, abgezogen und nach Passieren des Zirkulationssystems in den Autoklaven, vorzugsweise im Bodenbereich, zugeführt wird, wobei das Zirkulationssystem ggf. mit weiteren Einrichtungen, so insbesondere mit einem Wärmetauscher und/oder einem Farbstoffansatzgefäß, versehen ist. Nachdem bei dem erfindungsgemäßen Verfahren das jeweils zu färbende textile Substrat für eine vorgewählte Färbezeit an- bzw. durchströmt worden ist, was dazu führt, daß die überwiegende Menge des ursprünglich eingesetzten Farbstoffes auf das jeweils zu färbende textile Substrat aufgezogen ist und sich somit nur noch eine relativ geringe Restmenge an nicht aufgezogenem Farbstoff in dem überkritischen Fluid befindet, wird bei dem erfindungsgemäßen Verfahren diese Restmenge des mindestens einen, nicht auf das textile Substrat aufgezogenen Farbstoffes vor und/oder während der Durchführung der Druck- und/oder der Temperaturabsenkung und/oder der Volumenvergrößerung aus dem Fluid weitestgehend entfernt. Mit anderen Worten wird somit bei dem erfindungsgemäßen Verfahren vor und/oder während der Beendigung des Verfahrens, d.h. nach Ablauf einer vorgegebenen Färbezeit und somit vor und/oder während der Durchführung der Druckabsenkung, der Temperaturabsenkung und/oder der Volumenvergrößerung, das zu diesem Zeitpunkt bereits gefärbte textile Substrat nicht mehr mit einem solchen Fluid angeströmt bzw. durchströmt, das noch nennenswerte Reste an nicht aufgezogenem Farbstoff enthält. Vielmehr wird bei dem erfindungsgemäßen Verfahren in dieser Endstufe des Verfahrens ein weitestgehend von Restfarbstoff befreites Fluid verwendet, um das gefärbte textile Substrat an- bzw. durchzuströmen, so daß sich gleichzeitig und/oder hiernach die Druckabsenkung, die Temperaturabsenkung und/oder die Volumenvergrößerung anschließt, ohne daß dabei Restfarbstoffe auf das textile Substrat abgelagert werden.

Überraschend konnte festgestellt werden, daß bei der Anwendung des erfindungsgemäßen Verfahrens kein nennenswertes Entfärben des bereits gefärbten textilen Substrats auftrat, obwohl dieses zum Ende des eigentlichen Verfahrens hin, d.h. zu einem Zeitpunkt, an dem keine nennenswerte Farbton- oder Farbtiefenveränderung des gefärbten textilen Substrates mehr auftritt oder eine erwünschte Farbe des textilen Substrates erreicht worden ist, mit einem Fluid durch- bzw. angeströmt wird, das weitestgehend vom Farbstoff befreit ist oder keinen Farbstoff enthält. Die so nach dem erfindungsgemäßen Verfahren hergestellten Färbungen weisen eine hohe Farbechtheit, insbesondere eine hohe Reibechtheit, Wasserechtheit, Waschechtheit und/oder Schweißechtheit, auf. Von daher ist es auch nicht erforderlich, die nach dem erfindungsgemäßen Verfahren gefärbten textilen Substrat nach Abschluß der Färbung entsprechend nachzubehandeln, beispielsweise reduktiv nachzubehandeln, selbst dann nicht, wenn mit Hilfe des erfindungsgemäßen Verfahrens mittlere bis sehr tiefe (dunkle) Farbtöne gefärbt worden sind. Eine derartige Verbesserung der Farbechtheiten bei dem erfindungsgemäßen Verfahren wird darauf zurückgeführt, daß sich bei dem erfindungsgemäßen Verfahren am Ende des Färbeverfahrens, das auch als Ende der Färbung bezeichnet wird, kein Restfarbstoff mehr in dem Fluid, das das gefärbte textile Substrat durch- und/oder anströmt, befindet, so daß dementsprechend unmittelbar vor und/oder während der Druckabsenkung, Temperaturabsenkung und/oder der Volumenvergrößerung kein nicht fixierter Farbstoff auf dem jeweils zu färbenden Textilgut ausgefällt und somit auch nicht dort abgeschieden wird, was bei einer großtechnischen Anwendung des herkömmlichen Verfahrens, das in der DE 39 06 724 A beschrieben ist, stets der Fall ist. Dieser abgeschiedene bzw. abfiltrierte Farbstoff führt dann bei dem herkömmlichen Verfahren zu der eingangs beschriebenen Verschlechterung der Farbechtheiten.

Um bei dem erfindungsgemäßen Verfahren besonders reproduzierbar ausgezeichnete Echtheiten zu erzielen, sieht eine erste Weiterbildung des erfindungsgemäßen Verfahrens vor, daß vor der Durchführung der Druck- und/oder Temperaturabsenkung und/oder der Volumenvergrößerung der sich in dem überkritischen Fluid noch befindliche und nicht auf das textile Substrat aufgezogene mindestens eine Farbstoff aus dem überkritischen Fluid weitestgehend entfernt wird. Mit anderen Worten wird somit bei dieser ersten Weiterbildung des erfindungsgemäßen Verfahrens erst der nicht aufgezogene Farbstoff aus dem überkritischen Fluid ohne Änderung des Druckes und/oder der Temperatur des jeweils verwendeten überkritischen Fluids entfernt und dann die Färbung dadurch beendet, daß eine Druck- und/oder Temperaturabsenkung und/oder Volumenvergrößerung ausgeführt wird. Hier hat sich gezeigt, daß bei dieser ersten Weiterbildung des erfindungsgemäßen Verfahrens besonders sicher die in dem überkritischen Fluid noch vorhandenen, nicht aufgezogenen Farbstoffreste entfernt werden.

Besonders deutlich machen sich die zuvor beschriebenen Vorteile des erfindungsgemäßen Verfahrens dann bemerkbar, wenn zum Färben des textilen Substrates solche Farbstoffe eingesetzt werden, die einen relativ geringen Badauszug ermöglichen, d.h. solchen Farbstoffen, die nur zu etwa 85 % bis ca. 95 %, bezogen auf die ursprünglich eingesetzte Farbstoffmenge auf das textile Substrat aufziehen. Selbst bei solchen Farbstoffen, die einen maximalen Badauszug von etwa 97 % bis etwa 98 % besitzen, treten immer dann die zuvor beschriebenen Echtheitsverschlechterungen auf, wenn diese Farbstoffe nicht durch Anwendung des erfindungsgemäßen Verfahrens gefärbt werden.

Als weitere Vorteile des erfindungsgemäßen Verfahrens ist anzusehen, daß bei dem erfindungsgemäßen Verfahren das für die jeweilige Färbung eingesetzte Fluid gereinigt wird, da am Ende der Färbung der dann nicht aufgezogene Farbstoff weitestgehend aus dem Fluid entfernt wird. Dies hat zur Folge, daß ein derartig gereinigtes Fluid entweder problemlos abgeblasen oder für eine spätere Färbung aufgefangen und wiederverwendet werden kann. Ferner lassen sich so die in dem Fluid enthaltenen nicht aufgezogenen Farbstoffe oder andere, nachfolgend noch benannte Begleitstoffe problemlos entfernen und können umweltgerecht entsorgt oder wiederverwendet werden.

Grundsätzlich richtet sich bei dem erfindungsgemäßen Verfahren die Menge des nicht aufgezogenen Farbstoffes, der durch Anwendung des erfindungsgemäßen Verfahrens entfernt werden muß, danach, welche Farbstoffe eingesetzt werden und welche Farbtiefe durch Anwendung des erfindungsgemäßen Verfahrens mit welchen Farbechtheiten erreicht werden sollen. Bei hellen Färbungen, d.h. somit Färbungen, bei denen die Farbstoffkonzentration, bezogen auf das Gewicht des zu färbenden textilen Substrates zwischen etwa 0,01 % und etwa 0,5 % variiert, und bei solchen Farbstoffen, die einen maximalen Badauszug ermöglichen, genügt es in der Regel, am Ende der Färbung insbesondere vor und/oder während der Durchführung der Druckabsenkung, Temperaturabsenkung und/oder der Volumenvergrößerung etwa 50 Gew.% des nicht aufgezogenen Farbstoffes aus dem Fluid zu entfernen. Werden hingegen besonders gute Farbechtheiten gefordert, Farbstoffe mit einem relativ geringen Badauszug verwendet und/oder sollen durch Anwendung des erfindungsgemäßen Verfahrens mittlere bis tiefe Farbtöne gefärbt werden, wobei die Farbstoffkonzentration dann bei mittleren Farbtönen zwischen etwa 0,5 Gew.% und etwa 3 Gew.% und bei tieferen Farbtönen zwischen etwa 3 Gew.% und etwa 10 Gew.% variiert, so empfiehlt es sich, mindestens 80 Gew.% des nicht aufgezogenen Farbstoffes insbesondere vor und/oder während der Durchführung der Druckabsenkung, Temperaturabsenkung und/oder der Volumenvergrößerung zu entfernen.

Eine besonders geeignete und vorteilhafte Ausführungsform des erfindungsgemäßen Verfahrens sieht vor, daß zur Entfernung des mindestens einen, nicht aufgezogenen Farbstoffes das mit dem nicht aufgezogenen Farbstoff beladene überkritische Fluid aus dem Autoklaven und dem diesem zugeordneten Zirkulationssystem in ein zweites Zirkulationssystem überführt wird, wobei im zweiten Zirkulationssystem dann der nicht aufgezogene Farbstoff aus dem Fluid entfernt wird. Vorzugsweise wird dieses zweite Zirkulationssystem derart relativ zum ersten Zirkulationssystem angeordnet, daß das zweite Zirkulationssystem als Bypass zum ersten Zirkulationssystem geschaltet werden kann, so daß wahlweise die Entfernung des nicht aufgezogenen Farbstoffes aus dem Fluid unabhängig von der entsprechenden Färbung oder insbesondere gleichzeitig mit der entsprechenden Färbung jeweils am Ende der Färbung durchgeführt wird.

Besonders geeignet ist es jedoch, wenn bei dem erfindungsgemäßen Verfahren am Ende der Färbung, d.h. insbesondere vor und/oder während der Durchführung der Druckabsenkung, Temperaturabsenkung und/oder Volumenvergrößerung, das mit nicht aufgezogenen Farbstoffen beladene Fluid in das zweite Zirkulationssystem eingeleitet wird, so daß nach Entfernung dieser Farbstoffe im zweiten Zirkulationssystem das von nicht aufgezogenen Farbstoffen weitestgehend befreite Fluid wieder dem Autoklaven und dem diesem zugeordneten Zirkulationssystem zugeführt wird. Hierdurch tritt eine weitere Verdünnung des durch den Autoklaven und dem damit verbundenen Zirkulationssystem strömenden und noch mit Restfarbstoffen beladenen Fluids auf, so daß die Konzentration an Restfarbstoff weiter in gewünschter Weise verringert wird. Desweiteren hat diese Verfahrensvariante den Vorteil, daß das so von Restfarbstoffen befreite und wieder dem Autoklaven zugeführte überkritische Fluid im Kreislauf geführt wird, wodurch die entsprechenden Prozeßkosten verringert werden. Selbstverständlich ist es jedoch auch möglich, das mit Restfarbstoffen beladene und in das zweite Zirkulationssystem überführte überkritische Fluid separat aufzuarbeiten und in einem entsprechenden Tank zu lagern, während frisches Fluid dann dem Autoklaven und dem damit verbundenen Zirkulationssystem zugeführt wird.

Um bei den zuvor beschriebenen Ausführungsformen des erfindungsgemäßen Verfahren den mindestens einen, nicht aufgezogenen Farbstoff am Ende der Färbung aus dem überkritischen Fluid weitestgehend zu entfernen, sieht das erfindungsgemäße Verfahren drei vorteilhafte Möglichkeiten, die alternativ oder gemeinsam angewendet werden können, vor.

So wird bei der ersten Möglichkeit der nicht aufgezogene Farbstoff aus dem Fluid in dem zweiten Zirkulationssystem dadurch entfernt, daß durch eine Druckabsenkung, eine Temperaturabsenkung und/oder durch eine Volumenvergrößerung das Lösevermögen des Fluids für den mindestens einen, nicht aufgezogenen Farbstoff so weit verringert wird, daß der Farbstoff als solcher aus dem Fluid ausfällt. Diese Verfahrensweise weist den Vorteil auf, daß neben dem mindestens einen Farbstoff desweiteren noch andere, sich während der Färbung im Fluid gelöste Bestandteile, wie beispielsweise Öle, Avivagen, Oligomere o.dgl., aus dem Fluid ohne Schwierigkeiten und unproblematisch entfernen lassen. Hierbei richtet sich die Größe der Druckabsenkung, Temperaturabsenkung und/oder der Volumenvergrößerung nach dem Löseverhalten des nicht aufgezogenen Farbstoffes bzw. der zuvor genannten anderen Bestandteile in dem Fluid, wobei die Druckabsenkung, Temperaturabsenkung und/oder die Volumenvergrößerung so weit gehen kann, daß das Fluid den überkritischen Zustand verläßt und somit als Flüssigkeit und/oder Gas vorliegt. Dabei ist es jedoch dann erforderlich, zur Einspeisung dieser Flüssigkeit oder des Gases eine Temperatur- und Druckerhöhung herbeizuführen, um das jeweilige Fluid dann wieder in seinen überkritischen Zustand zu überführen und in den Autoklaven und das damit verbundene Zirkulationssystem einzuspeisen, sofern der nicht aufgezogene mindestens eine Farbstoff am Ende der Färbung vor der Durchführung der Druckabsenkung, Temperaturabsenkung und/oder Volumenvergrößerung entfernt wird.

Bei einer zweiten Möglichkeit des erfindungsgemäßen Verfahrens wird in dem zweiten Zirkulationssystem der nicht aufgezogene Farbstoff durch Ad- und/oder Absorption an mindestens einem Sorbens entfernt. Diese Alternative des erfindungsgemäßen Verfahrens beinhaltet im Vergleich zu der zuvor beschriebenen ersten Möglichkeit den Vorteil, daß hierbei die Ad- und/oder Absorption des nicht aufgezogenen Farbstoffes im überkritischen Zustand des Fluid erfolgen kann, so daß dann eine erneute Druck- und/oder Temperaturerhöhung nicht mehr erforderlich wird, um das entsprechend gereinigte und vom nicht aufgezogenen Farbstoff befreite überkritische Fluid dann wieder in den Autoklaven und das damit verbundene Zirkulationssystem einzuspeisen und danach dann die zur Beendigung des Färbens erforderliche Druckabsenkung, Tempraturabsenkung und/oder Volumenvergrößerung herbeizuführen.

Selbstverständlich ist es auch möglich, die zuvor beschriebenen beiden Möglichkeiten miteinander zu kombinieren, d.h. im zweiten Zirkulationssystem den Druck und/oder die Temperatur des mit Restfarbstoff beladenen Fluids abzusenken und gleichzeitig dieses Fluid mit dem Sorbens in Kontakt zu bringen. Diese kombinierte Maßnahme wird immer dann angewendet, wenn das Löslichkeitsverhalten des jeweiligen Farbstoffes in dem verwendeten Fluid unter den jeweils gewählten Temperatur- und Druckbedingungen noch so hoch ist, daß eine relativ große Sorbensmenge erforderlich ist, um die erwünschte Ad- bzw. Absorption herbeizuführen. Ebenfalls kann sich diese kombinierte Verfahrensweise dann anbieten, wenn neben dem Restfarbstoff noch weitere Bestandteile, die sich während des Färbens im überkritischen Fluid gelöst haben, aus diesem entfernt werden sollen, wobei es sich bei diesen weiteren Bestandteilen dann insbesondere um Öle, Avivagen, Präparationen und/oder Oligomere handelt.

Bezüglich des Sorbens, das bei den zuvor beschriebenen Ausführungsvarianten des erfindungsgemäßen Verfahrens eingesetzt wird, ist grundsätzlich festzuhalten, daß hierfür jedes Sorbens geeignet ist, das mit dem jeweils eingesetzten Fluid nicht reagiert und das unter den jeweils ausgewählten Temperatur- und Druckbedingungen stabil ist. Als besonders geeignet hat sich ein solches Sorbens erwiesen, das aus der Gruppe, bestehend aus Aktivtonerden, Kieselgelen, Aktivkohlen und/oder zeolithischen Molekularsieben, ausgewählt wird. Diese Sorbentien gestatten in hohem Maße eine schnelle und unproblematische Ad- bzw. Absorption des nicht aufgezogenen Farbstoffes, insbesondere eines nicht aufgezogenen Dispersionsfarbstoffes, so daß dementsprechend nur geringe Mengen des Sorbens erforderlich sind. Selbstverständlich ist es jedoch auch möglich, Mischungen der zuvor aufgeführten speziellen Sorbentien zu verwenden, wobei diese Mischungen dann insbesondere angewandt werden, wenn der zu entfernende Farbstoffrest von solchen Farbstoffen, die sich bezüglich ihrer Polarität und/oder ihres Molekulargewichtes und/oder ihrer sterischen Größe deutlich unterscheiden, aus dem Fluid zu entfernen sind.

Vorzugsweise werden die zuvor genannten Sorbentien dann als kugelförmige oder stäbchenförmige Sorbentien angewendet, um so bei einer guten Durchströmung der Sorbentien eine möglichst dichte und platzsparende Packung zu erreichen.

Für besonders extreme Anforderungen empfiehlt es sich, solche Sorbentien auszuwählen, die einen harten, inerten Kern, beispielsweise aus Glas oder Stahl, aufweisen und die mit einer entsprechenden äußeren Schicht des jeweiligen Sorbens versehen sind. Aus derartigen Sorbentien lassen sich besonders gut und gleichmäßig durchströmbare Packungen erstellen.

Besonders hohe Abscheidungsraten lassen sich dann bei dem erfindungsgemäßen Verfahren dadurch erzielen, daß ein solches Sorbens ausgewählt wird, das eine Partikelgröße zwischen 0,5 mm und 20 mm, vorzugsweise zwischen 1 mm und 10 mm, aufweist. Die hieraus hergestellten Packungen sind dicht gepackt und dennoch einwandfrei und gleichmäßig zu durchströmen.

Bezüglich der Dichte des jeweils ausgewählten Sorbens ist festzuhalten, daß diese zwischen 1.800 kg/m³ und 3.500 kg/m³, vorzugsweise zwischen 200 kg/m³ und 3.000 kg/m³, variiert, während die Porosität des Sorbens insbesondere zwischen 0,3 und 0,8, vorzugsweise zwischen 0,4 und 0,7, liegt.

Abhängig von der Menge des jeweils aus dem verwendeten Fluid abzuscheidenden und nicht aufgezogenen mindestens einen Farbstoffes richtet sich bei dem erfindungsgemäßen Verfahren auch die innere Oberfläche des jeweils ausgewählten Sorbens. Weist das jeweils zu reinigende Fluid nur eine relativ kleine Menge an Restfarbstoff auf, was immer dann der Fall ist, wenn das erfindungsgemäße Verfahren zum Färben von relativ hellen Tönen mit solchen Farbstoffen angewendet wird, die einen hohen Badauszug, so zum Beispiel im Bereich oberhalb von 95 %, aufweisen, so wählt man ein Sorbens aus, dessen innere Oberfläche zwischen etwa 200 m²/g und 700 m²/g liegt. Weist jedoch das jeweils zu reinigende Fluid eine relativ hohe Restfarbstoffmenge auf, was insbesondere bei Anwendung des erfindungsgemäßen Verfahrens zum Färben von mittleren oder tiefen Farbtönen oder bei Verwendung von schlecht ziehenden Farbstoffen der Fall ist, so wird hierfür ein Sorbens ausgewählt, dessen innere Oberfläche zwischen etwa 700 m²/g und 1.500 mg²/g liegt. Somit ist insgesamt festzuhalten, daß insbesondere die innere Oberfläche des bei dem erfindungsgemäßen Verfahren ausgewählten Sorbens zwischen 200 m²/g und 1.500 m²/g, vorzugsweise zwischen 300 m²/g und 1.200 m²/g, variiert.

Analoges gilt auch für das Porenvolumen des bei dem erfindungsgemäßen Verfahren ausgewählten Sorbens, wobei vorzugsweise hier das Porenvolumen zwischen 0,2 cm³/g und 1,4 cm³/g, insbesondere zwischen 0,35 cm³/g und 1,1 cm³/g, liegt.

Sowohl der mittleren Porendurchmesser als auch der Tortuositätsfaktor des bei dem erfindungsgemäßen Verfahren ausgewählten Sorbens richten sich insbesondere nach der sterischen Größe des jeweils eingesetzten Farbstoffes, der aus dem überkritischen Fluid entfernt wird. Besonders gute Abscheidungsraten lassen sich dann bei dem erfindungsgemäßen Verfahren erzielen, wenn ein Sorbens ausgewählt wird, dessen mittlerer Porendurchmesser zwischen 2 nm und 400 nm, vorzugsweise zwischen 10 nm und 150 nm, und/oder dessen Tortuositätsfaktor zwischen 2 und 9, vorzugsweise zwischen 3,5 und 7, variieren.

Um eine besonders wirtschaftliche Entfernung des nicht aufgezogenen mindestens einen Farbstoffes aus dem Fluid sicherzustellen, sieht eine Weiterbildung der zuvor beschriebenen Ausführungsvariante des erfindungsgemäßen Verfahrens vor, daß hierbei das mit dem mindestens einen, nicht aufgezogenen Farbstoff beladene Fluid durch das zweite Zirkulationssystem mit einer Fördergeschwindigkeit zwischen 20 mm/s und 80 mm/s, vorzugsweise zwischen 40 mm/s und 60 mm/s, gefördert wird.

Bezüglich der Zeit, die erforderlich ist, um bei den zuvor beschriebenen Ausführungsformen des erfindungsgemäßen Verfahrens insbesondere vor und/oder während der Durchführung der Druckabsenkung, Temperaturabsenkung und/oder Volumenvergrößerung den nicht aufgezogenen Farbstoff aus dem für die Färbung verwendeten Fluid weitestgehend zu entfernen, ist festzuhalten, daß diese Zeit dann zwischen 2 Minuten und 15 Minuten, vorzugsweise zwischen 5 Minuten und 10 Minuten, variiert, wenn das mit dem nicht aufgezogenen Farbstoff beladene Fluid kontinuierlich aus dem Autoklaven und/oder dem damit verbundenen Zirkulationssystem abgezogen und zur Entfernung dieses nicht aufgezogenen Farbstoffes in das zweite Zirkulationssystem überführt wird und hiernach das vom nicht aufgezogenen Farbstoff befreiten Fluid kontinuierlich wieder in den Autoklaven und/oder dem damit verbundenen Zirkulationssystem eingespeist wird. Mit anderen Worten erfordern vorzugsweise die zuvor beschriebenen Ausführungsformen des erfindungsgemäßen Verfahrens für die Entfernung des nicht aufgezogenen Farbstoffes aus dem jeweils verwendeten Fluid eine Zeit zwischen etwa 2 Minuten und 15 Minuten, vorzugsweise zwischen 5 Minuten und 10 Minuten, so daß nach Verstreichen dieser Zeit dann die Färbung abgeschlossen ist.

Vorstehend ist und nachstehend wird wiederholt der mindestens eine, nicht aufgezogene Farbstoff erwähnt, wobei diese Formulierung aussagen soll, daß nicht nur ein einzelner, nicht aufgezogener Farbstoff in dem Fluid sondern auch eine Mischung von mehreren, nicht aufgezogenen Farbstoffen in dem Fluid enthalten sein kann, wobei letzteres überwiegend auftritt, da üblicherweise textile Substrat nicht mit einem Einzelfarbstoff sondern mit einer Mischung von zwei bis etwa acht Farbstoffen, vorzugsweise mit einer Mischung von zwei bis vier Farbstoffen, gefärbt werden.

Die dritte, grundsätzliche Möglichkeit zur weitestgehenden Entfernung des nicht aufgezogenen Farbstoffes ist darin zu sehen, daß am Ende der Färbung und somit unmittelbar insbesondere vor und/oder während der Durchführung der Druck - und/oder Temperaturabsenkung und/oder der Volumenvergrößerung das den Farbstoff noch enthaltende und für die eigentliche Färbung verwendete Fluid durch ein weiteres, farbstofffreies Fluid verdünnt und/oder verdrängt wird. Mit anderen Worten wird bei dieser dritten Möglichkeit das sich im Autoklaven befindende und für die Färbung verwendete Fluid durch mindestens ein weiteres Fluid, das in den Färbeautoklaven oder in das erste Zirkulationssystem eingespeist wird, teilweise oder vollständig ersetzt, so daß dementsprechend auch kein nicht aufgezogener Farbstoff auf dem textilen Substrat ausfallen kann.

Insbesondere dann, wenn hierfür als weiteres Fluid eine Flüssigkeit verwendet wird, die dann vor und/oder während der Durchführung der Druckabsenkung, Temperaturabsenkung und/oder Volumenvergrößerung in den Autoklaven oder das erste Zirkulationssystem eingespeist wird, lassen sich bei diesen Ausführungsformen des erfindungsgemäßen Verfahrens hervorragende Echtheiten mit geringem Aufwand erzielen.

Eine besonders schnelle und weitestgehende Entfernung des nicht aufgezogenen Farbstoffes aus dem Fluid kann bei der zuvor beschriebenen dritten Möglichkeit dann erreicht werden, wenn das weitere Fluid ein Lösungsmittel für den verwendeten mindestens einen Farbstoff darstellt.

Als bevorzugte Flüssigkeiten, die bei den zuvor beschriebenen Ausführungsformen des erfindungsgemäßen Verfahrens zur Verdünnung und/oder Verdrängung des den nicht aufgezogenen Farbstoff enthaltenen Fluids als weiteres Fluid eingesetzt werden, sind insbesondere flüssiges Kohlendioxid, Wasser oder Glykole, vorzugsweise Propylenglykol, zu benennen.

In den vorstehend beschriebenen Ausführungsformen des erfindungsgemäßen Verfahrens ist wiederholt herausgestellt worden, daß unmittelbar vor und/oder während der Durchführung der Druck- und/oder Temperaturabsenkung und/oder der Volumenvergrößerung der sich in dem Fluid noch befindliche und nicht auf das textile Substrat aufgezogene mindestens eine Farbstoff aus dem Fluid weitestgehend entfernt wird. Einen hohen Wirkungsgrad dieser Entfernung des nicht aufgezogenen Farbstoffes läßt sich dann bei dem erfindungsgemäßen Verfahren erzielen, wenn die diesbezügliche Entfernung des nicht aufgezogenen Farbstoffes aus dem jeweils verwendeten Fluid unmittelbar vor und während der Durchführung der Druck- und/oder Temperaturabsenkung und/oder der Volumenvergrößerung durchgeführt wird. Vielfach reicht es jedoch zur Erzielung von vertretbaren Echtheiten aus, wenn der nicht auf das textile Substrat aufgezogene mindestens eine Farbstoff unmittelbar vor oder während der Durchführung der Druck- und/oder Temperaturabsenkung und/oder der Volumenvergrößerung aus dem jeweils zur Färbung verwendeten Fluid weitestgehend entfernt wird, wobei eine unmittelbar vor der Durchführung der Druck- und/oder Temperaturabsenkung und/oder Volumenvergrößerung ausgeführte Entfernung des nicht aufgezogenen Farbstoffes bevorzugt wird, da diese Verfahrensvariante des erfindungsgemäßen Verfahrens sowohl bezüglich des Farbausfalls als auch der erzielbaren Echtheiten eine hohe Reproduzierbarkeit gewährleistet.

Wie bereits vorstehend wiederholt angedeutet ist, wird das erfindungsgemäße Verfahren vorzugsweise bei solchen Färbungen angewendet, die als Farbstoff einen Dispersionsfarbstoff in Verbindung mit Kohlendioxid als überkritisches Fluid verwenden. Vorzugsweise werden hierfür als textile Substrat Nähgarne aus Polyesterfasern ausgewählt, wobei diese Nähgarne dann in der Aufmachung als Spule, insbesondere als X-Spule, gefärbt werden.

Selbstverständlich kann jedoch auch ein anderes überkritisches Fluid oder Fluidgemisch bei dem erfindungsgemäßen Verfahren eingesetzt werden, wobei hierfür die in der DE 39 06 724 A aufgeführten Fluida unter den dort genannten Bedingungen in Frage kommen.

Selbstverständlich ist es auch möglich, bei den zuvor beschriebenen Ausführungsformen des erfindungsgemäßen Verfahrens das zuvor beschriebene feste Sorbens durch ein flüssiges Sorbens oder flüssiges Sorbensgemisch zu ersetzen, an das dann der mindestens eine nicht aufgezogene Farbstoff absorbiert wird. Hierfür kommen insbesondere solche Flüssigkeiten in Frage, die ein gutes Lösevermögen für den Farbstoff besitzen. Dies bedeutet für Dispersionsfarbstoffe und dem überkritischen Fluid Kohlendioxid, daß hierbei als flüssige Sorbentien Alkohole, insbesondere Methanol, Ethanol, Isopropanol und/oder Isobutanol, Aceton, Chloroform und/oder Dimethylformamid ausgewählt werden.

Vorteilhafte Weiterbildungen des erfindungsgemäßen Verfahrens sind in den Unteransprüchen angegeben.

Das erfindungsgemäße Verfahren wird nachfolgend anhand des Ausführungsbeispiels 2 in Verbindung mit der Zeichnung näher erläutert. Es zeigen:
- Figur 1: das Fließschema einer herkömmlichen Anlage;
- Figur 2: das Fließschema einer ersten Ausführungsform der Anlage, wie sie im nachfolgenden noch beschriebenen Ausführungsbeispiel 2 verwendet wurde;
- Figur 3: das Fließschema der in Figur 2 gezeigten Anlage, jedoch modifiziert.

### Ausführungsbeispiel 1

Auf einer herkömmlichen Praxisanlage, wie diese in Figur schematisch gezeigt ist, wurde eine Säule, bestehend aus vier Nähgarn-X-Spulen mit einem Gesamtgewicht von 9,8 kg, in überkritischem Kohlendioxid gefärbt. Hierbei wurden folgende Farbstoffe eingesetzt:
0,2 Gew.% eines gelben Dispersionsfarbstoffes,
0,8 Gew.% eines blauen Dispersionsfarbstoffes.

Die eingesetzten Dispersionsfarbstoffe stellten reine Farbstoffe dar, d.h. sie wiesen keine Stellmittel oder sonstige Zusätze auf.

Die Bedingungen beim Färben waren wie folgt:

| | |
|---|---|
| überkritisches Fluid | Kohlendioxid |
| Flottenverhältnis | 1:5 |
| Temperatur | 130 °C |
| Druck | 250 bar |
| Färbezeit | 35 Minuten |

Am Ende der Färbung wurde der Druck in 10 bar-Stufen bis auf einen Enddruck von 80 bar innerhalb von 25 Minuten abgelassen, wobei bei Erreichen des Enddruckes von 80 bar eine kontinuierliche Druckabsenkung bis zum Normaldruck innerhalb von vier Minuten erfolgte.

Von den so gefärbten Garnen wurde die Wasserechtheit, Waschechtheit, Reibechtheit und Schweißechtheit nach den entsprechenden DIN-Normen bestimmt. Alle Echtheiten waren extrem schlecht und wiesen ein maximales Echtheitsniveau von 2, benotet nach dem Graumaßstab, auf.

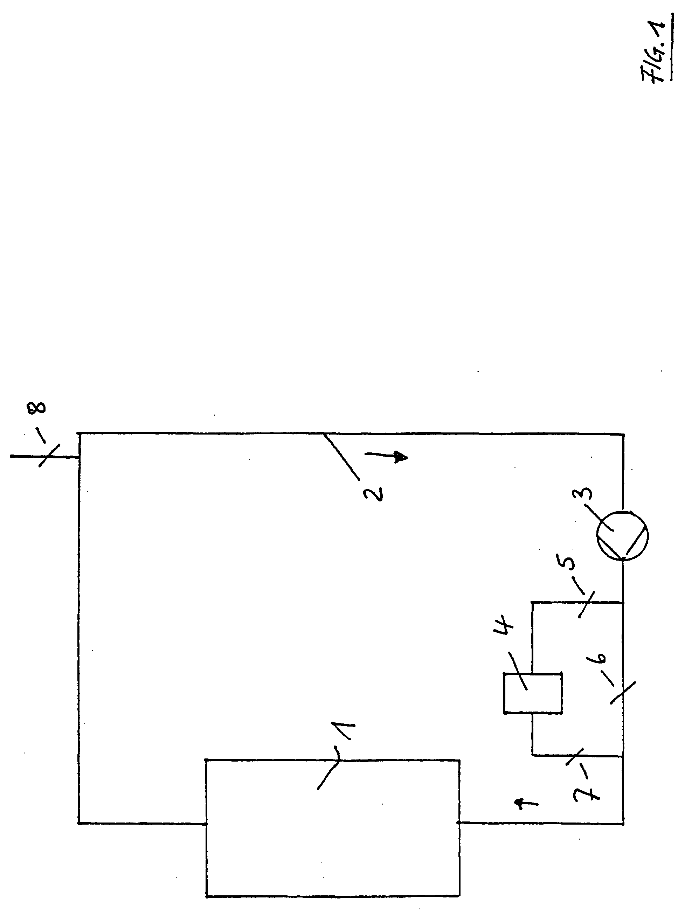

Um die zuvor beschriebene herkömmliche Färbung in überkritischem Kohlendioxid durchzuführen, weist die in Figur 1 gezeigte herkömmliche Anlage einen Autoklaven 1 zur Aufnahme der Säule der vier Nähgarn-X-Spulen auf. Der Färbeautoklave 1 ist mit einem ersten Zirkulationssystem versehen, wobei das erste Zirkulationssystem ein entsprechendes Rohrleitungssystem 2 umfaßt. Innerhalb dieses Rohrleitungssystems 2 des ersten Zirkulationssystems ist eine Zirkulationspumpe 3 angeordnet.

In einem Bypass zum Rohrleitungssystem 2 ist ein Farbansatzgefäß 4 angeordnet.

Desweiteren weist das Rohrleitungssystem 2 eine nicht gezeigte Einspeisung für Kohlendioxid sowie einen Wärmetauscher (ebenfalls nicht gezeigt) auf.

Die zuvor beschriebene herkömmliche Praxisanlage arbeitet wie folgt:

Zunächst wird die Säule der vier Nähgarn-X-Spulen innerhalb des Autoklaven 1 angeordnet, so daß nach Schließen des Autoklaven die entsprechenden Rohrleitungen 2 des ersten Zirkulationssystems sowie der Autoklave 1 selbst über die Einspeisung und eine nicht gezeigte Druckerhöhungspumpe mit überkritischem Kohlendioxid gefüllt wird. Hiernach wird die Zirkulationspumpe 3 in Betrieb genommen, was dazu führt, daß das überkritische Kohlendioxid durch das Rohrleitungssystem 2 und den Autoklaven 1 in Pfeilrichtung strömt.

Nach Erreichen der vorstehend aufgeführten Endtemperatur und des zuvor genannten Drucks werden die Ventile 5 und 7 des Bypasses geöffnet, so daß das überkritische Kohlendioxid durch das Farbansatzgefäß 4 strömt und dort die zuvor aufgeführten Farbstoffe löst. Zu diesem Zeitpunkt ist das Ventil 6 geschlossen.

Nach Ablauf der Färbezeit wird die Anlage über das geöffnete Ventil 8 in der zuvor beschriebenen Weise entspannt.

### Ausführungsbeispiel 2

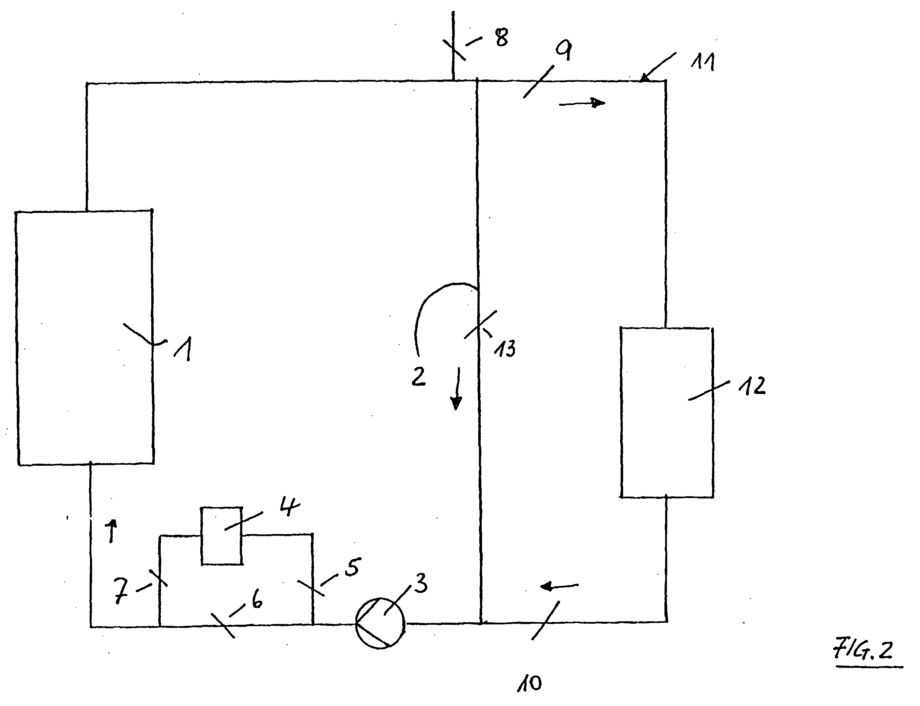

Auch die in Figur 2 gezeigte schematisch gezeigte Anlage weist, wie die vorstehend beschriebene und in Figur 1 gezeigte Anlage, einen Autoklaven 1 zur Aufnahme der Säule der vier Nähgarn-X-Spulen auf. Der Färbeautoklave 1 ist mit einem ersten Zirkulationssystem versehen, wobei das erste Zirkulationssystem ein entsprechendes Rohrleitungssystem 2 umfaßt. Innerhalb dieses Rohrleitungssystems 2 des ersten Zirkulationssystems ist eine Zirkulationspumpe 3 angeordnet.

In einem Bypass zum Rohrleitungssystem 2 ist ein Farbansatzgefäß 4 angeordnet.

Desweiteren weist das Rohrleitungssystem 2 eine nicht gezeigte Einspeisung für Kohlendioxid sowie einen Wärmetauscher (ebenfalls nicht gezeigt) auf.

Zusätzlich zu dem ersten Zirkulationssystem ist bei der in der Figur 2 schematisch gezeigten Anlage ein zweites Zirkulationssystem, das insgesamt mit 11 bezeichnet ist, vorhanden. Hierbei umfaßt dieses zweite Zirkulationssystem 11, das auch als Adsorptionskreislauf zu bezeichnen ist, zwei Ventile 9 und 10 sowie einen Autoklaven 12, wobei der Autoklave 12 mit einem nachfolgend noch beschriebenen Sorbens gefüllt ist.

Die zuvor beschriebene und in der Figur 2 gezeigte Anlage arbeitet wie folgt:

Zunächst wird die Säule der vier Nähgarn-X-Spulen innerhalb des Autoklaven 1 angeordnet, wie dies bereits vorstehend im Ausführungsbeispiel 1 beschrieben ist. Nach Schließen des Autoklaven werden das entsprechende Rohrleitungssystem 2 des ersten Zirkulationssystems sowie der Autoklave 1 selbst über die nicht gezeigte Einspeisung und eine nicht gezeigte Druckerhöhungspumpe mit überkritischem Kohlendioxid gefüllt. Hiernach wird die Zirkulationspumpe 3 in Betrieb genommen, was dazu führt, daß das überkritische Kohlendioxid durch das Rohrleitungssystem 2 und den Autoklaven 1 in Pfeilrichtung strömt. Zu diesem Zeitpunkt sind die Ventile 9 und 10 geschlossen und das Ventil 13 ist geöffnet.

Nach Erreichen der vorstehend im Ausführungsbeispiel 1 aufgeführten Endtemperatur und des dort genannten Drucks werden die Ventile 5 und 7 des Bypasses geöffnet, so daß das überkritische Kohlendioxid durch das Farbansatzgefäß 4 strömt und dort die zuvor aufgeführten Farbstoffe löst. Zu diesem Zeitpunkt ist das Ventil 6 geschlossen.

Nach Ablauf einer Färbezeit von 35 Minuten werden die in der Figur 2 gezeigten Ventile 9 und 10 geöffnet, und das Ventil 13 wird geschlossen. Dies hat zur Folge, daß nunmehr das zweite, als Bypass geschaltete Zirkulationssystem 11 und der darin angeordnete Autoklave 12 in Pfeilrichtung durchströmt wird.

Nach einer Verweilzeit von fünf Minuten wird die Anlage über das geöffnete Ventil 8 so entspannt, wie dies vorstehend im Ausführungsbeispiel 1 beschrieben ist.

Der Autoklave 12 ist mit einem Kieselgel, Typ Trysil, gefüllt. Hierbei weist dieses Kieselgel eine Partikelgröße zwischen 2 mm und 8 mm, eine Dichte von 2.200 kg/m³, eine Schüttdichte von 550 kg/m³, eine Porösität von 0,55, eine innere Oberfläche von ca. 450 m²/g, ein Porenvolumen von 0,4 cm³/g, einen mittleren Porendurchmesser zwischen 4 nm und 10 nm und einen Tortuositätsfaktor von 5,0 auf.

Um unerwünschte Druck- und/oder Temperaturschwankungen beim Verbinden des ersten Zirkulationssystems mit dem zweiten Zirkulationssystem zu verhindern, war das zweite Zirkulationssystem zuvor mit überkritischem Kohlendioxid bei einem Druck von 250 bar und bei einer Temperatur von 130 °C gefüllt worden.

Die beim Beispiel 2 angewandten Bedingungen des Färbens entsprachen ansonsten den Bedingungen, wie sie vorstehend im Ausführungsbeispiel 1 angegeben sind.

Die auf der in Figur 2 gezeigten Anlage gefärbten Garne wiesen ein deutlich besseres Echtheitsniveau auf, wobei auch hierbei wiederum die Wasserechtheit, Waschechtheit, Reibechtheit und Schweißechtheit gemessen wurde. Das Echtheitsniveau der so hergestellten Färbung lag bei allen gemessenen Echtheiten über 4, beurteilt nach dem üblichen Graumaßstab.

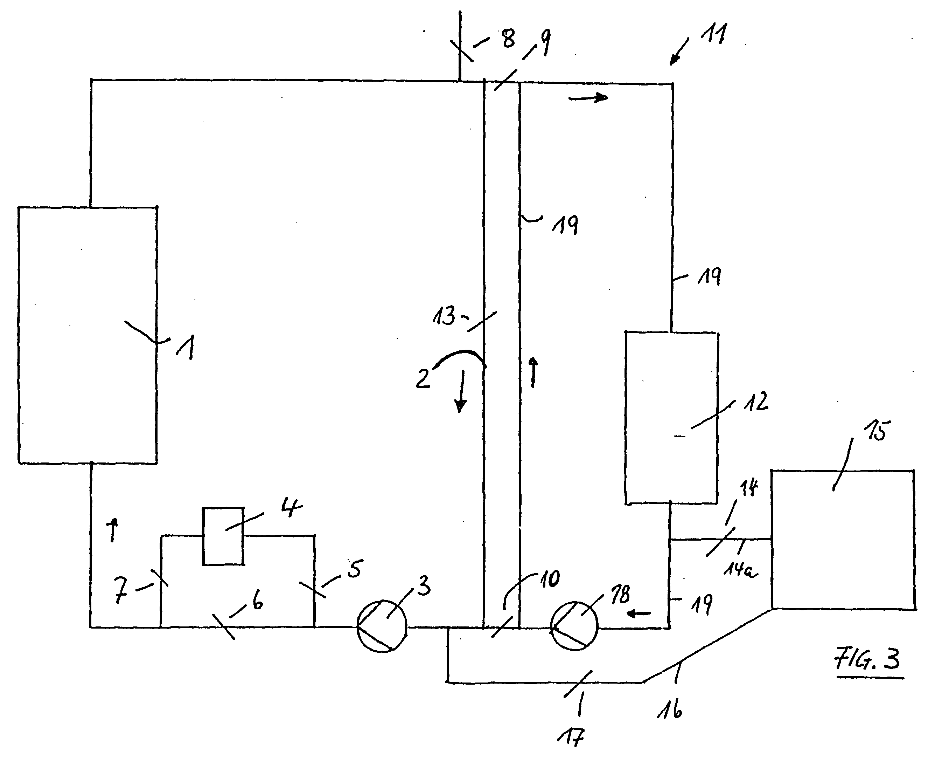

Die in Figur 3 schematisch gezeigte Anlage unterscheidet sich von der zuvor beschriebenen Anlage in der Ausgestaltung des zweiten Zirkulationssystems 11, das auch vorstehend als Adsorptionskreislauf bezeichnet wurde.

Die in Figur 3 abgebildete Anlage weist einen Autoklaven 1 zur Aufnahme der Säule von vier Nähgarn-X-Spulen auf. Der Färbeautoklave 1 ist mit einem ersten Zirkulationssystem versehen, wobei das erste Zirkulationssystem ein entsprechendes Rohrleitungssystem 2 umfaßt. Innerhalb dieses Rohrleitungssystems 2 des ersten Zirkulationssystems ist eine Zirkulationspumpe 3 angeordnet.

In einem Bypass zum Rohrleitungssystem 2 ist ein Farbansatzgefäß 4 vorgesehen.

Desweiteren weist das Rohrleitungssystem 2 eine nicht gezeigte Einspeisung für Kohlendioxid sowie einen Wärmetauscher (ebenfalls nicht gezeigt) auf.

Bei der in Figur 3 schematisch gezeigten Anlage ist desweiteren ein zweites Zirkulationssystem vorhanden, das insgesamt mit 11 bezeichnet ist. Hierbei umfaßt dieses zweite Zirkulationssystem 11 die Ventile 9, 10, 14 und 17, wobei die Ventile 9 und 10 als Absperrventile zwischen den beiden Zirkulationssystemen und die Ventile 17 und 14 als Füll- bzw. Ablaufventile ausgebildet sind. Desweiteren ist im Rohrleitungssystem 19 des zweiten Zirkulationssystems 11 eine zweite Zirkulationspumpe 18 vorgesehen.

Dem zweiten Zirkulationssystem 11 ist ein Vorratstank für Kohlendioxid 15 zugeordnet, wobei der Vorratstank 15 einerseits über das Rohr 14a und das darin angeordnete Ventil 14 mit dem Rohrleitungssystem 19 und andererseits über das Rohr 16 und das darin angeordnete Ventil 17 mit dem Rohrleitungssystem 2 des ersten Zirkulationssystems verbunden ist.

Die in Figur 3 gezeigte Anlage arbeitet wie folgt:

Zunächst wird eine Säule von vier Nähgarn-X-Spulen innerhalb des Autoklaven 1 angeordnet, so daß nach Schließen des Autoklaven die entsprechenden Rohrleitungen 2 des ersten Zirkulationssystems sowie der Autoklave 1 selbst über die Einspeisung und eine nicht gezeigte Druckerhöhungspumpe mit überkritischem Kohlendioxid gefüllt wird. Hiernach wird die Zirkulationspumpe 3 in Betrieb genommen, was dazu führt, daß das überkritische Kohlendioxid durch das Rohrleitungssystem 2 und den Autoklaven 1 in Pfeilrichtung strömt.

Nach Erreichen der vorstehend aufgeführten Endtemperatur und des zuvor genannten Drucks werden die Ventile 5 und 7 des Bypasses geöffnet, so daß das überkritische Kohlendioxid durch das Farbansatzgefäß 4 strömt und dort die zuvor aufgeführten Farbstoffe löst. Zu diesem Zeitpunkt ist das Ventil 6 geschlossen.

Nach Ablauf einer vorgegebenen Färbezeit werden die Ventile 9 und 10 geöffnet, so daß das zweite Zirkulationssystem 11 aus dem Rohrleitungssystem 2 des ersten Zirkulationssystems befüllt wird. Zu diesem Zeitpunkt ist das Ventil 13 geschlossen. Um hierbei einen Druckabfall im ersten Zirkulationssystem zu verhindern, wird gleichzeitig aus dem Vorratstank 15 über die Leitung 16 und das geöffnete Ventil 17 frisches, mit Farbstoffen nicht beladenes Kohlendioxid in das erste Zirkulationssystem eingespeist.

Nachdem das zweite Zirkulationssystem 11 befüllt ist, werden die Ventil 9, 10 und 17 geschlossen, wohingegen das Ventil 13 wieder geöffnet wird. Zu diesem Zeitpunkt wird die Färbung im ersten Zirkulationssystem 2 fortgeführt. Gleichzeitig und unabhängig hiervon wird im zweiten Zirkulationssystem 11 das mit Restfarbstoffen beladene Fluid mittels der Pumpe 18 in Pfeilrichtung durch den Autoklaven 12 gefördert, wobei der Autoklave 12 beispielsweise mit dem zuvor beschriebenen Sorbens gefüllt ist.

Nach einer vorgegebenen Verweilzeit ist dann das in dem zweiten Zirkulationssystem 11 vorhandene überkritische Fluid restlos von nicht aufgezogenen Farbstoffen befreit, so daß es über das geöffnete Ventil 14 und das Rohr 14a in den Vorratstank 15 eingeführt werden kann.

Die in der Figur 3 gezeigte Anlage wird dann verwendet, wenn die Fördergeschwindigkeit des Fluids im ersten Zirkulationssystem deutlich von der Fördergeschwindigkeit des Fluids im zweiten Zirkulationssystem 11, d.h. somit in dem Adsorptionskreislauf, abweicht.

## Patentansprüche

1. Verfahren zum Färben eines textilen Substrates, insbesondere zum Färben von Garnen aus Polyester, bei dem das zu färbende Substrat in einem Autoklaven angeordnet und mit einem, mindestens einen Farbstoff aufweisenden überkritischen Fluid an- bzw. durchströmt wird, wobei das überkritische Fluid über ein dem Autoklaven zugeordnetes Zirkulationssystem ständig gefördert wird, und bei dem zur Beendigung des Verfahrens eine Druck- und/oder Temperaturabsenkung und/oder eine Volumenvergrößerung durchgeführt wird, **dadurch gekennzeichnet**, daß unmittelbar vor und/oder während der Durchführung der Druck- und/oder Temperaturabsenkung und/oder der Volumenvergrößerung der sich in dem Fluid noch befindliche und nicht auf das textile Substrat aufgezogene mindestens eine Farbstoff aus dem Fluid weitestgehend entfernt wird, so daß das textile Substrat mit einem Fluid durch- bzw. angeströmt wird, das weitestgehend vom Farbstoff befreit ist oder keinen Farbstoff enthält.

2. Verfahren nach Anspruch 1, **dadurch gekennzeichnet**, daß unmittelbar vor der Durchführung der Druck- und/oder Temperaturabsenkung und/oder der Volumenvergrößerung der sich in dem Fluid noch befindliche und nicht auf das textile Substrat aufgezogene mindestens eine Farbstoff aus dem Fluid weitestgehend entfernt wird.

3. Verfahren nach einem der vorangehenden Ansprüche, **dadurch gekennzeichnet**, daß der mindestens eine, nicht aufgezogene Farbstoff zu wenigstens 80 Gew.%, bezogen auf die Gesamtmenge des nicht aufgezogenen Farbstoffes in dem Fluid, entfernt wird.

4. Verfahren nach Anspruch 3, **dadurch gekennzeichnet**, daß zur Entfernung des mindestens einen, nicht aufgezogenen Farbstoffes das mit dem nicht aufgezogenen Farbstoff beladene Fluid aus dem Autoklaven und dem diesem zugeordneten Zirkulationssystem in ein zweites Zirkulationssystem überführt wird und daß im zweiten Zirkulationssystem dann der nicht aufgezogene Farbstoff aus dem Fluid entfernt wird.

5. Verfahren nach Anspruch 4, **dadurch gekennzeichnet**, daß nach dem Entfernen des nicht aufgezogenen Farbstoffes das vom nicht aufgezogenem Farbstoff weitestgehend befreite Fluid wieder dem Autoklaven und dem diesem zugeordneten Zirkulationssystem zugeführt wird.

6. Verfahren nach Anspruch 4 oder 5, **dadurch gekennzeichnet**, daß in dem zweiten Zirkulationssystem der nicht aufgezogene Farbstoff durch eine Druckabsenkung, eine Temperaturabsenkung und/oder durch eine Volumenvergrößerung des Fluids entfernt wird.

7. Verfahren nach einem der Ansprüche 4 bis 6, **dadurch gekennzeichnet**, daß das zweite Zirkulationssystem als Bypass zum ersten Zirkulationssystem angeordnet wird.

8. Verfahren nach einem der Ansprüche 4 bis 7, **dadurch gekennzeichnet**, daß in dem zweiten Zirkulationssystem der nicht aufgezogene Farbstoff durch Ad- und/oder Absorption an mindestens einem Sorbens entfernt wird.

9. Verfahren nach Anspruch 8, **dadurch gekennzeichnet**, daß als Sorbens mindestens ein solches Sorbens, ausgewählt aus der Gruppe, bestehend aus Aktivtonerden, Kieselgelen, Aktivkohlen und/oder zeolithischen Molekularsieben, verwendet wird.

10. Verfahren nach Anspruch 9, **dadurch gekennzeichnet**, daß als Sorbens ein solches Sorbens ausgewählt wird, das eine Partikelgröße zwischen 0,5 mm und 20 mm, vorzugsweise zwischen 1 mm und 10 mm, aufweist.

11. Verfahren nach Anspruch 9 oder 10, **dadurch gekennzeichnet**, daß als Sorbens ein solches Sorbens verwendet wird, dessen Dichte zwischen 1.800 kg/m³ und 3.500 kg/m³, vorzugsweise zwischen 2.000 kg/m³ und 3.000 kg/m³, variiert.

12. Verfahren nach einem der Ansprüche 9 bis 11, **dadurch gekennzeichnet**, daß als Sorbens ein solches Sorbens verwendet wird, dessen Porosität zwischen 0,3 und 0,8, vorzugsweise zwischen 0,4 und 0,7, variiert.

13. Verfahren nach einem der Ansprüche 9 bis 12, **dadurch gekennzeichnet**, daß das ausgewählte Sorbens eine innere Oberfläche zwischen 200 m²/g und 1.500 m²/g, vorzugsweise zwischen 300 m²/g und 1.200 m²/g, aufweist.

14. Verfahren nach einem der Ansprüche 9 bis 13, **dadurch gekennzeichnet**, daß als Sorbens ein solches Sorbens ausgewählt wird, dessen Porenvolumen zwischen 0,2 cm³/g und 1,4 cm³/g, vorzugsweise zwischen 0,35 cm³/g und 1,1 cm³/g, variiert.

15. Verfahren nach einem der Ansprüche 9 bis 14, **dadurch gekennzeichnet**, daß als Sorbens ein solches Sorbens ausgewählt wird, dessen mittlerer Porendurchmesser zwischen 2 nm und 400 nm, vorzugsweise zwischen 10 nm und 150 nm, variiert.

16. Verfahren nach einem der Ansprüche 9 bis 15, **dadurch gekennzeichnet**, daß das ausgewählte Sorbens einen Tortuositätsfaktor zwischen 2 und 9, vorzugsweise zwischen 3,5 und 7, aufweist.

17. Verfahren nach einem der Ansprüche 4 bis 16, **dadurch gekennzeichnet**, daß das mit dem nicht aufgezogenen mindestens einen Farbstoff beladene Fluid durch das zweite Zirkulationssystem mit einer Fördergeschwindigkeit zwischen 20 mm/s und 80 mm/s, vorzugsweise mit einer Fördergeschwindigkeit zwischen 40 mm/s und 60 mm/s, gefördert wird.

18. Verfahren nach einem der Ansprüche 4 bis 17, **dadurch gekennzeichnet**, daß das mit dem mindestens einen, nicht aufgezogenen Farbstoff beladene Fluid zwischen 2 Minuten und 15 Minuten, vorzugsweise zwischen 5 Minuten und 10 Minuten, durch das zweite Zirkulationssystem gefördert wird.

19. Verfahren nach einem der vorangehenden Ansprüche, **dadurch gekennzeichnet**, daß als textiles Substrat ein Nähgarn aus Polyesterfasern ausgewählt wird, daß der mindestens eine Farbstoff ein Dispersionsfarbstoff ist und daß das für die Färbung verwendete Fluid Kohlendioxid ist.

20. Verfahren nach einem der vorangehenden Ansprüche, **dadurch gekennzeichnet**, daß unmittelbar vor und/oder während der Durchführung der Druck- und/oder Temperaturabsenkung und/oder der Volumenvergrößerung der sich in dem Fluid noch befindliche und nicht auf das textile Substrat aufgezogene mindestens eine Farbstoff aus dem Fluid dadurch weitestgehend entfernt wird, daß das den nicht aufgezogenen Farbstoff noch enthaltende Fluid durch ein weiteres, farbstofffreies Fluid verdünnt und/oder verdrängt wird.

21. Verfahren nach Anspruch 20, **dadurch gekennzeichnet**, daß das den mindestens einen, nicht aufgezogenen Farbstoff enthaltende Fluid durch ein als Flüssigkeit vorliegendes weiteres Fluid verdünnt und/oder verdrängt wird.

22. Verfahren nach Anspruch 20 oder 21, **dadurch gekennzeichnet**, daß in dem weiteren Fluid der nicht aufgezogene Farbstoff gelöst wird.

23. Verfahren nach einem der Ansprüche 20 bis 22, **dadurch gekennzeichnet**, daß als weiteres Fluid flüssiges Kohlendioxid, Wasser und/oder ein Glykol, insbesondere Propylenglykol, ausgewählt wird.

24. Verfahren nach einem der vorangehenden Ansprüche, **dadurch gekennzeichnet**, daß unmittelbar vor der Durchführung der Druck- und/oder Temperaturabsenkung und/oder der Volumenvergrößerung der sich in dem Fluid noch befindliche und nicht auf das textile Substrat aufgezogene mindestens eine Farbstoff aus dem Fluid weitestgehend entfernt wird.

## Claims

1. A method for the dyeing of a textile substrate, preferably for the dyeing of yarns consisting of polyester, in which the substrate to be dyed is arranged within an autoclave and perfused, respectively superfused, with a supercritical fluid containing at least one dye, whereby the supercritical fluid is transported by means of a circulation system arranged at the autoclave, and in which a pressure decrease and/or a temperature decrease and/or a volume increase is carried out to finish the method, **characterised in that** the at least one dye existing in the fluid and not being absorbed by the textile substrate is removed out of the fluid immediately before and/or during the realization of the pressure decrease and/or the temperature decrease and/or the volume increase, in such a way, that the textile substrate is perfused respectively superfused with a fluid, which is widely set free of dye or which does not contain a dye.

2. The method according to claim 1, **characterised in that** the at least one dye existing in the fluid and not being absorbed by the textile substrate is widely removed out of the fluid immediately before the realization of the pressure decrease and/or the temperature decrease and/or the volume increase.

3. The method according to one of the preceding claims, **characterised in that** the at least one unabsorbed dye is removed out of the fluid at least to 80 % by weight relative to the total amount of the unabsorbed dye in the fluid.

4. The method according to claim 3, **characterised in that** for the removal of the at least one unabsorbed dye the fluid containing the unabsorbed dye is transmitted from the autoclave and the respective circulation system into a second circulation system and that in the second circulation system the unabsorbed dye is removed out of the fluid.

5. The method according to claim 4, **characterised in that** the fluid being mainly free from the unabsorbed dye is transmitted back into the autoclave and its corresponding circulation system after the removal o: the unabsorbed dye.

6. The method according to claim 4 or 5, **characterised in that** in the second circulation system the unabsorbed dye is removed by means of a pressure decrease and/or temperature decrease and/or volume increase of the fluid.

7. The method according to one of the claims 4 to 6, **characterised in that** the second circulation system is arranged as bypass of the first circulation system.

8. The method according to one of the claims 4 to 7, **characterised in that** in the second circulation system the unabsorbed dye is removed by ad- and/or absorption at a at least one sorbent.

9. The method according to claim 8, **characterised in that** as sorbent at least such a sorbent is used chosen from the group comprising activated aluminium oxides, silica gels, activated carbons and/or zeolithic molecular sieves.

10. The method according to claim 9, **characterised in that** as sorbent such a sorbent is selected having a particle size of between 0,5 mm and 20 mm, preferably between 1 mm and 10 mm.

11. The method according to claim 9 or 10, **characterised in that** as sorbent such a sorbent is used having a density varying between 1.800 kg/m³ and 3.500 kg/m³, preferably between 2.000 kg/m³ and 3.000 kg/m³.

12. The method according to one of the claims 9 to 11, **characterised in that** as sorbent such a sorbent is used having a porosity varying between 0,3 and 0,8, preferably between 0,4 and 0,7.

13. The method according to one of the claims 9 to 12, **characterised in that** the selected sorbent has an inner surface of between 200 m²/g and 1.500 m²/g, preferably between 300 m²/g and 1.200 m²/g.

14. The method according to one of the claims 9 to 13, **characterised in that** as sorbent such a sorbent is selected having a pore volume varying between 0,2 cm²/g and 1,4 cm²/g, preferably between 0,35 cm²/g and 1,1 cm²/g.

15. The method according to one of the claims 9 to 14, **characterised in that** as sorbent such a sorbent is selected having a middle pore diameter varying between 2 nm and 400 nm, preferably between 10 nm and 150 nm.

16. The method according to one of the claims 9 to 15, **characterised in that** the selected sorbent has a tortuosity factor of between 2 and 9, preferably between 3,5 and 7.

17. The method according to one of the claims 4 to 16, **characterised in that** the at least one fluid containing the unabsorbed dye is transported through the second circulation system with a transport speed of between 20 mm/s and 80 mm/s, preferably with a transport speed of between 40 mm/s and 60 mm/s.

18. The method according to one of the claims 4 to 17, **characterised in that** the fluid containing the at least one unabsorbed dye is transported through the second circulation system between 2 minutes and 15 minutes, preferably between 5 minutes and 10 minutes.

19. The method according to one of the preceding claims, **characterised in that** as textile substrate a polyester sewing yarn is selected, that the at least one dye is a disperse dye and that the fluid used for the dyeing is carbon dioxide.

20. The method according to one of the preceding claims, **characterised in that** the at least one dye containing in the fluid and not being absorbed by the textile substrate is mainly removed immediately before and/or during the realization of the pressure decrease and/or temperature decrease and/or volume increase in that way, that the fluid containing the unabsorbed dye is diluted and and/or displaced by a further fluid being free of dyes.

21. The method according to claim 20, **characterised in that** the fluid containing the at least one unabsorbed dye is diluted and/or displaced by a liquid provided as a further fluid.

22. The method according to claim 20 or 21, **characterised in that** in the further fluid the unabsorbed dye is solved.

23. The method according to one of the preceding claims 20 to 22, **characterised in that** as further fluid a liquid carbon dioxide, water and/or glycol, particularly propylenglycol, is chosen.

24. The method according to one of the preceding claims, **characterised in that** the at least one dye containing in the fluid and not being absorbed by the textile substrate is mainly removed immediately before the realization of the pressure decrease and/or temperature decrease and/or volume increase.

## Revendications

1. Procédé de teinture d'un substrat textile, en particulier de teinture de fils en polyester, dans lequel le substrat. à teinter est placé dans un autoclave et est submergé ou encore traversé par un fluide supercritique comprenant au moins un colorant, le fluide supercritique étant continuellement transporté par un système de circulation coordonné à l'autoclave, et dans lequel il est procédé à une diminution de la pression et */* ou de la température et */* ou à une augmentation du volume pour mettre fin au procédé, **caractérisé en ce que**, immédiatement avant qu'il soit procédé et/ou pendant qu'il est procédé à la diminution de la pression et / ou de la température et / ou à l'augmentation du volume, ledit un colorant se trouvant encore dans le fluide et n'ayant pas été absorbé par le substrat textile est éliminé du fluide dans toute la mesure du possible afin que le substrat soit submergé ou encore traversé par un fluide qui est débarrassé de colorant dans toute la mesure du possible ou qui ne contient pas de colorant.

2. Procédé selon la revendication 1, **caractérisé en ce que**, immédiatement avant qu'il soit procédé à la diminution de la pression et */* ou de la température et */* ou à l'augmentation du volume, ledit au moins un colorant se trouvant encore dans le fluide et n'ayant pas été absorbé par le substrat textile est éliminé du fluide dans toute la mesure du possible.

3. Procédé selon une des revendications précédentes, **caractérisé en ce que** ledit au moins un colorant n'ayant pas été absorbé par le substrat textile est éliminé au moins à 80 % en poids de la quantité totale du colorant non absorbé se trouvant dans le fluide.

4. Procédé selon la revendication 3, **caractérisé en ce que**, pour l'élimination du dit au moins un colorant non absorbé, le fluide chargé avec le colorant non absorbé est transféré de l'autoclave et du système de circulation qui lui est coordonné dans un deuxième système de circulation et en ce que, dans le deuxième système de circulation, le colorant non absorbé est éliminé du fluide.

5. Procédé selon la revendication 4, **caractérisé en ce que**, après l'élimination du dit au moins un colorant non absorbé, le fluide débarrassé du colorant non absorbé dans toute la mesure du possible est, à nouveau, envoyé dans l'autoclave et dans le système de circulation qui lui est coordonné.

6. Procédé selon la revendication 4 ou 5, **caractérisé en ce que**, dans le deuxième système de circulation, le colorant non absorbé est éliminé par une diminution de la pression, une diminution de la température et / ou par une augmentation du volume du fluide.

7. Procédé selon une des revendications 4 à 6, **caractérisé en ce que** le deuxième système de circulation est configuré en circuit de dérivation par rapport au premier système de circulation.

8. Procédé selon une des revendications 4 à 7, **caractérisé en ce que**, dans le deuxième système de circulation, le colorant non absorbé est éliminé par adsorption et / ou absorption sur au moins un agent de sorption.

9. Procédé selon la revendication 8, **caractérisé en ce qu**'on utilise comme agent de sorption au moins un agent de sorption choisi dans le groupe constitué des oxydes d'aluminium actifs, des gels de silice, des charbons actifs et / ou des tamis moléculaires zéolithiques.

10. Procédé selon la revendication 9, **caractérisé en ce qu**'on choisit comme agent de sorption un agent de sorption qui présente une granulométrie entre 0,5 mm et 20 mm, de préférence entre 1 mm et 10 mm.

11. Procédé selon la revendication 9 ou 10, **caractérisé en ce qu**'on utilise comme agent de sorption un agent de sorption dont la masse volumique varie entre 1 800 kg/m³ et 3 500 kg/m³, de préférence entre 2 000 kg/m³ et 3 000 kg/m³.

12. Procédé selon une des revendications 9 à 11, **caractérisé en ce qu**'on utilise comme agent de sorption un agent de sorption dont la porosité varie entre 0,3 et 0,8, de préférence entre 0,4 et 0,7.

13. Procédé selon une des revendications 9 à 12, caractérisé en ce l'agent de sorption choisi présente une surface intérieure entre 200 m²/g et 1 500 m²/g, de préférence entre 300 m²/g et 1 200 m²/g.

14. Procédé selon une des revendications 9 à 13, **caractérisé en ce qu**'on choisit comme agent de sorption un agent de sorption dont le volume porique varie entre 0,2 cm³/g et 1,4 cm³/g, de préférence entre 0,35 cm³/g et 1,1 cm³/g.

15. Procédé selon une des revendications 9 à 14, **caractérisé en ce qu**'on choisit comme agent de sorption un agent de sorption dont le diamètre porique moyen varie entre 2 nm et 400 nm, de préférence entre 10 nm et 150 nm.

16. Procédé selon une des revendications 9 à 15, caractérisé en ce l'agent de sorption choisi présente un facteur de tortuosité entre 2 et 9, de préférence entre 3,5 et 7.

17. Procédé selon une des revendications 4 à 16, **caractérisé en ce que** le fluide chargé avec ledit au moins un colorant non absorbé est transporté dans le deuxième système de circulation a une vitesse de transport entre 20 mm/s et 80 mm/s, de préférence à une vitesse de transport entre 40 mm/s et 60 mm/s.

18. Procédé selon une des revendications 4 à 17, **caractérisé en ce que** le fluide chargé avec ledit au moins un colorant non absorbé est transporté entre 2 minutes et 15 minutes, de préférence entre 5 minutes et 10 minutes, dans le deuxième système de circulation.

19. Procédé selon une des revendications précédentes, **caractérisé en ce qu**'on choisit comme substrat textile un fil à coudre en fibres de polyester, en ce que ledit au moins un colorant est un colorant de dispersion et en ce que le fluide utilisé pour la teinture est du dioxyde de carbone.

20. Procédé selon une des revendications précédentes, **caractérisé en ce que**, immédiatement avant qu'il soit procédé et/ou pendant qu'il est procédé à la diminution de la pression et/ou de la température et/ou à l'augmentation du volume, ledit au moins un colorant se trouvant encore dans le fluide et n'ayant pas été absorbé par le substrat textile est éliminé du fluide dans toute la mesure du possible du fait que le fluide contenant encore le colorant non absorbé est dilué et / ou refoulé par un autre fluide sans colorant.

21. Procédé selon la revendication 20, **caractérisé en ce que** le fluide contenant ledit au moins un colorant non absorbé est dilué et / ou refoulé par un autre fluide présent sous forme de liquide.

22. Procédé selon la revendication 20 ou 21, **caractérisé en ce que** le colorant non absorbé est dissout dans l'autre fluide.

23. Procédé selon une des revendications 20 à 22, **caractérisé en ce qu**'on choisit comme autre fluide du dioxyde de carbone liquide, de l'eau et / ou un glycol, en particulier du propylène glycol.

24. Procédé selon une des revendications précédentes, **caractérisé en ce que**, immédiatement avant qu'il soit procédé à la diminution de la pression et/ou de la température et / ou à l'augmentation du volume, ledit au moins un colorant se trouvant encore dans le fluide et n'ayant pas été absorbé par le substrat textile est éliminé du fluide dans toute la mesure du possible.
